# EUROPÄISCHE PATENTSCHRIFT

(11) **EP 2 000 230 B1**
(45) Veröffentlichungstag und Bekanntmachung des Hinweises auf die Patenterteilung: **12.05.2010**
(21) Anmeldenummer: 08010231.2
(22) Anmeldetag: 05.06.2008
(51) Int. Cl.: B21D 53/84, F16H 53/02

(54) **Verfahren zur Herstellung von Nocken für gebaute Nockenwellen**
Method for manufacturing cams for built camshafts
Procédé de fabrication de cames pour arbres à cames montés

(30) Priorität: 06.06.2007 DE 102007026824
(43) Veröffentlichungstag der Anmeldung: 10.12.2008
(73) Patentinhaber: Muhr und Bender KG, 57489 Attendorn (DE)
(72) Erfinder: Bonse, Rudolf, Dr.-Ing., 57439 Attendorn (DE); Schellbach, Jürgen, Dipl.-Ing., 06502 Thale (DE); Wolf, Jochen, Dipl.-Ing., 06484 Quedlinburg (DE)
(74) Vertreter: Neumann, Ernst Dieter

(56) Entgegenhaltungen:
- EP-A- 0 328 009
- EP-A- 0 718 473
- EP-A- 1 347 211
- EP-B- 1 107 839
- WO-A-96/27460
- DE-A1-102004 049 272

## Beschreibung

Die Erfindung betrifft ein Verfahren zum Herstellen von Nocken für gebaute Nockenwellen und ein Verfahren zum Herstellen von gebauten Nockenwellen mit einem solchen Verfahren hergestellten Nocken.

Zum Aufbau gebauter Nockenwellen werden unter anderem warmumgeformte Nokken bereits eingesetzt. In Abhängigkeit von dem Füge- bzw. Montageprinzip, nach dem die Nocken auf einer Welle oder einem Wellenrohr montiert werden, sowie den einzuhaltenden Bauteil- und Zusammenbautoleranzen, werden diese warmumgeformten Nocken heute in der Nockenbohrung und teilweise an den Planflächen des Nockens anschließend mechanisch bearbeitet, d.h. spanend bearbeitet. Diese Bearbeitung ist erforderlich, um den beim Warmumformen entstandenen Positionsfehler zwischen der Nockenbohrung und der Nockenaußenkontur einzuschränken, da sich dieser Fehler nach der Montage als Bearbeitungsaufmaß an der Kontur des Nockens abbildet und später weggeschliffen werden muß. Die Stirnflächen (Planflächen) werden bearbeitet, um Planschläge, d.h. Winkelfehler der Stirnflächen bezüglich der Bohrungsachse zu reduzieren, damit die Nockenbreite vollständig als Lauffläche nutzbar wird. Im übrigen werden die Stirnflächen (Planflächen) bearbeitet, um Bundgeometrien vorzubearbeiten, wenn der Nocken als Bundnocken mit anschließendem Bund ausgeführt ist.

Die für ein thermisches Fügen oder ein axiales Aufpressen der Nocken auf ein Rohr erforderlichen Endmaße der Nockenbohrung werden heute durch ein Präzisionsdrehen (z.B. Hartdrehen) oder Innenschleifen der Nockenbohrung erreicht. Zusätzlich werden Einführfasen an den Nockenbohrungen gedreht oder geschliffen, die für das mechanische Fügen der Nocken mit einer gerändelten Welle oder das Aufschieben der Nocken auf erhabene Nockensitze an einer Welle erforderlich sind. Nocken, die auf einem Wellenrohr durch Innenhochdruckumformen des Wellenrohres gefügt werden, werden bisher ausgespindelt, um eine genauere Position der Bohrung zu der Nockenaußenkontur zu erreichen und um den Fügespalt mit engen Toleranzen zu bemaßen.

Nachteilig an der spanenden Vorbearbeitung der Nocken sind zum einen der kostenintensive Zerspanungsprozeß mit der Schwierigkeit, den Nocken über seine Nockenaußenkontur definiert zu spannen, sowie zum anderen der zur Überprüfung des Ergebnisses der mechanischen Bearbeitung erforderliche meßtechnische Aufwand.

Aus der WO 96/27460 A1 ist ein Verfahren zur Herstellung von Nocken für gebaute Nockenwellen durch Kaltumformung auf Fertigmaß bekannt, bei dem aus vom Rundstabstahl abgetrennten Rohlingen in einer am Nockenumfang geteilten Matrize eine äußere Nockenkontur erstellt wird. Nach der Umformung bleiben die Stirnflächen der Nocke leicht bombiert. Die Nocke wird bedarfsweise, sofern sie nicht mit Schleifaufmaß hergestellt werden soll, anschließend einem Kalibrieren unterzogen wird, indem diese durch eine Ziehmatrize gestoßen wird. Die Art der Herstellung der Bohrung zur Aufnahme eines Schaftes wird hinsichtlich der Offenbarung ausdrücklich ausgespart.

Hiervon ausgehend ist es die Aufgabe der vorliegenden Erfindung, ein Verfahren zur Herstellung von warmumgeformten Nocken bereitzustellen, mit dem die Anzahl der spanenden Bearbeitungsschritte reduziert werden kann. Die Lösung besteht in einem Verfahren zum Herstellen von warmgeschmiedeten Nocken für gebaute Nockenwellen mit den Schritten
- Warmumformen eines Nockens mit Ausformen einer Nockenaußenkontur und Lochen einer Nockenbohrung, sowie
- axiales und radiales Kalibrieren des Nockens
   wobei das Kalibrieren die Teilschritte - Einlegen des Nockens in eine ungeteilte Matrize, die die kalibrierte Nockenaußenkontur definiert,
- Einführen eines Dorns in die Nockenbohrung, der die kalibrierte Nockenbohrung definiert, und
- axiales Verkürzen des Nockens zwischen einem zwischen Matrize und Dorn einsitzenden Unterstempel, auf dem der Nocken mit einer ersten Stirnfläche aufliegt, und einem zwischen Matrize und Dorn geführten Oberstempel, der die zweite Stirnfläche des Nockens beaufschlagt.
umfaßt

Das Kalibrieren kann im Zustand der Restwärme aus dem Warmumformen oder an dem auf Umgebungstemperatur abgekühlten Nocken erfolgen.

Mit dem hiermit angegebenen Verfahren wird der Nocken vorzugsweise im halbwarmen oder kalten Zustand auf Endmaße kalibriert, die ein nachfolgendes mechanisches Bearbeiten der Nockenbohrung und der Stirnflächen für die Fügeverfahren durch Innenhochdruckumformung des Wellenrohres oder durch thermisches Aufschrumpfen der Nocken oder durch Fügen der Nocken mit einer gerändelten Welle oder durch Aufschieben der Nocken auf erhabene Bereiche an einer Welle überflüssig macht. Es ist beim genannten Kalibrieren nur ein Schleifaufmaß an der Nockenkontur für das Schleifen der Nockenwelle nach dem Fügen vorzuhalten. Während für die Maßhaltigkeit der Nockenaußenkontur und der Nockenbohrung die Werkzeugabmessungen bestimmend sind, ist für die endgültige Nockenbreite der axiale Verfahrweg der Stempel relativ zueinander ausschlaggebend.

In besonders vorteilhafter Weise werden die nach dem Schmieden notwendigerweise leicht konischen Flächen der Nockenkontur und der Nockenbohrung zum einen auf eine verbesserte Form Zylinderform gebracht, die im Längsverlauf völlig gerade oder ballig sein kann, wodurch insbesondere das Fügen ohne Nachbearbeitung der Nokkenbohrung erst möglich wird. Zum anderen wird jeglicher Planschlag der Stirnflächen (Planflächen) ausgeglichen, so daß die gesamte Nockenbreite als Lauffläche genutzt werden kann und die Breite der Nocken mit engen Toleranzen bemaßt werden kann.

Darüberhinaus ist es möglich, mittels des Kalibrierens Lagefehler zwischen der Bohrungsachse und der Kontur, die bisher nur durch Vorhalten großer Aufmaße und entsprechend große Zerspanungsanteile ausgeglichen werden konnten, im Zuge des Kalibrierens vollständig auszugleichen. Mit dem Kalibrieren wird die Streuungsbreite nach dem Warmumformen, die aufgrund des hohen Werkzeugverschleißes beim Warmumformen unvermeidlich ist, nahezu gänzlich ausgeglichen.

Neben den mechanischen (spanenden) Bearbeitungsschritten entfällt auch der üblicherweise notwendige Bearbeitungsschritt des Glühens, der im allgemeinen Voraussetzung für eine mechanische Bearbeitung nach dem Warmumformen ist.

Das Warmumformen des Nockens kann die folgenden Teilschritte umfassen:
- Abteilen einer Scheibe von Stabmaterial,
- Gesenkschmieden der Scheibe zu einer Scheibe mit Nockenaußenkontur,
- Lochen der Scheibe mit Nockenkontur zur Erzeugung der Nockenbohrung mittels eines Lochers.

Das Stabmaterial kann hierbei ein Rundstab oder ein Profilstab sein, wobei letzterer im Querschnitt der Nockenform bereits angenähert sein kann.

Nach einer ersten Ausführungsform erfolgt das Lochen mit einem Locher mit runder Schneidkante, der eine glatte Nockenbohrung erzeugt. Hiermit wird ein Nocken vorbereitet, der nach dem Kalibrieren eine zylindrische Sitzfläche zur Befestigung auf einer Welle aufweist, wodurch die Sitzfläche zur Befestigung auf einer Welle aufweist, wodurch die Sitzfläche maximiert ist.

Ein Nocken mit einer derartigen Nockenbohrung ist besonders geeignet zur Festlegung auf einer Hohlwelle mittels Hochdruckinnenumformung.

Nach einer zweiten Ausführungsform erfolgt das Lochen mit einem Locher mit profilierter Schneidkante, die insbesondere umlaufend gewellt oder umlaufend gezahnt ist.

Das so erzeugte Profil der Nockenbohrung hält für den nachfolgenden Verfahrensschritt Freiräume vor, in die während des Kalibrierprozesses Material ausweichen kann. Hiermit ist es somit möglich, die Geometrie eines geschmiedeten Nockens in allen ihren Richtungen zu korrigieren.

Zudem wird durch die Profilierung die Kontaktfläche zwischen dem runden Dorn des Kalibriergesenks und der Nockenbohrung auf den Bereich der Spitzen des Profils reduziert. Die beim Kalibrieren zwischen Dorn und Nockenbohrung entstehenden Kontaktkräfte wirken folglich zuerst nur auf die kleinere Fläche der Profilspitzen. Die vom Dorn abzufangenden Querkräfte werden effektiv reduziert, so daß ein Ausweichen oder Abscheren des Dorns verhindert wird.

Während des Kalibrierens kommen zuerst die außerhalb der Sollposition liegenden Profilspitzen mit dem runden Dorn in Kontakt. Hier wirkt folglich die gesamte Gegenkraft des Dorns. Das Profil wird an diesen Stellen während des Kalibrierens plastisch verformt. Das Ergebnis ist eine Nockenbohrung mit derart abgeflachten Profilspitzen, daß der sich einstellende Innenkreis auf die Sollposition der Nockenbohrung korrigiert wird. Somit werden effektiv Bearbeitungsaufmaße reduziert, da gleichzeitig die Nockenaußenkontur und die Lage der Nockenbohrung relativ zur Nockenaußenkontur während des Kalibrierens korrigiert wird.

Die Tiefe des Profils und der Innenkreis des rohen Profils nach dem Lochen werden so gewählt, daß zum einen der in Idealposition stehende Dorn in den noch unkalibrierten Nocken eingeführt werden kann und um anderen nach dem Kalibriervorgang umlaufend die verformten Profilspitzen am runden Dorn anliegen.

In Summe muß der Pferchkreisdurchmesser mindestens der Summe aus Dorndurchmesser und Außermittigkeit der Bohrung entsprechen. Ferner empfiehlt sich eine Profiltiefe in mindestens der Größe der Außermittigkeit, um spätmöglichst im Kalibriervorgang ein flächiges Anliegen zu erzielen.

In Summe muß der Innenkreis des rohen Profils nach dem Lochen mindestens der Summe aus Domdurchmesser und Außermittigkeit der rohen Nockenbohrung entsprechen. Ferner empfiehlt sich eine Profiltiefe in mindestens der Größe der Außenmittigkeit, um spätmöglichst im Kalibriervorgang ein flächiges Anliegen zu erzielen.

Der so geometrisch korrigierte Nocken wird vergütet und anschließend auf einer Nockenwelle gefügt. Die Innenprofilierung der Nockenbohrung wird dabei so ausgeführt, daß eine durch Innenhochdruck zum Fügen der Nocken umgeformte Rohrwelle idealerweise vollständig dem Profil der kalibrierten Nockenbohrung folgen und sich flächig an die Nockenbohrung anlegen kann und gegenüber dieser aufgrund der plastischen Rohrverformung radial unter Spannung steht. Es ist jedoch auch zulässig, daß nach dem Fügen Lichtspalte zwischen den Spitzen der profilierten Nockenbohrung, die an der Rohrwelle anliegen, verbleiben.

Das Warmumformen erfolgt nach einem Aufheizen des Materials auf über 1100°C. Hierbei ist insbesondere vorgesehen, daß das Abteilen der einzelnen Scheiben durch Abscheren erst nach dem Aufheizen des Materials, also in warmem Zustand, erfolgt. Während das Warmumformen mehrere, insbesondere drei Schritte umfaßt, erfolgt das Kalibrieren in einem einzigen Zug des Oberstempels gegenüber dem Unterstempel.

Zur Herstellung von Standardnocken werden einteilige, zum Nocken hin plane Ober- und Unterstempel verwendet. Für die Fertigung von Nocken mit einem Bundansatz oder zwei Bundansätzen ist vorgesehen, daß zumindest der Oberstempel, gegebenenfalls auch der Unterstempel, zweiteilig ist und aus einem äußeren Konturstempel und einem inneren axial zurückgesetzten ringzylindrischen Bundstempel bestehen. Der Konturstempel und der Bundstempel können hierbei unabhängig voneinander zustellbar sein. Hiermit kann ein weitgehend fertiggeformter Bundansatz an einer oder beiden Stirnflächen des Nockens angeformt werden.

Wie bereits angedeutet, bestehen besondere Verfahrensmerkmale darin, daß die Nockenbohrung auf Fertigmaß zum unmittelbaren Fügen kalibriert wird und daß die Nockenkontur ausschließlich mit einem Schleifaufmaß kalibriert wird.

Ein Verfahren zum Herstellen einer gebauten Nockenwelle mit Nocken, die gemäß dem vorstehend beschriebenen Verfahren hergestellt sind, schließt die Verfahrensmethode des Auffädelns von Nocken auf ein Wellenrohr in kaltem Zustand und ein anschließendes Innenhochdruckumformen des Wellenrohres innerhalb der Nocken ebenso ein wie ein Verfahren, das ein Aufwärmen der Nocken vor dem Aufschieben der Nocken auf eine Welle und ein thermisches Schrumpfen durch Abkühlen der Nocken umfaßt, und ein Verfahren, das ein sequentielles Aufschieben der Nocken auf Wellenbereiche mit einem Übermaß gegenüber der Nockenbohrung betrifft..

Bevorzugte Ausführungsbeispiele von erfindungsgemäßen Nocken und eines erfindungsgemäßen Verfahrens zu ihrer Herstellung sind in den Zeichnungen dargestellt und werden nachstehend beschrieben.
- Figur 1: zeigt einen erfindungsgemäß hergestellten, Nocken in einer ersten Ausführung
a) in Axialansicht auf die Nockenbohrung
b) im Schnitt A-A nach Darstellung a);
- Figur 2: zeigt einen axialen Schnitt durch die Achse der Nockenbohrung und die Achse eines Kalibriergesenkes am Ende des Kalibriervorgangs;
- Figur 3: zeigt einen axialen Schnitt einen Nocken und die Matrize und den Dorn eines Kalibriergesenkes
a) vor dem Kalibrieren
b) nach dem Kalibrieren.
- Figur 4: zeigt einen erfindungsgemäß hergestellten Nocken in einer zweiten Ausführung
a) in Axialansicht auf die Nockenbohrung
b) im Schnitt B-B nach Darstellung a) jeweils vor dem Kalibrieren (durchgezogen) und nach dem Kalibrieren (gestrichelt).
- Figur 5: zeigt den Nocken nach Figur 4 mit dem Dorn eines Kalibriergesenks
a) in Axialansicht auf die Nockenbohrung
b) im Schnitt B-B nach Darstellung a) jeweils vor dem Kalibrieren (durchgezogen) und nach dem Kalibrieren (gestrichelt).

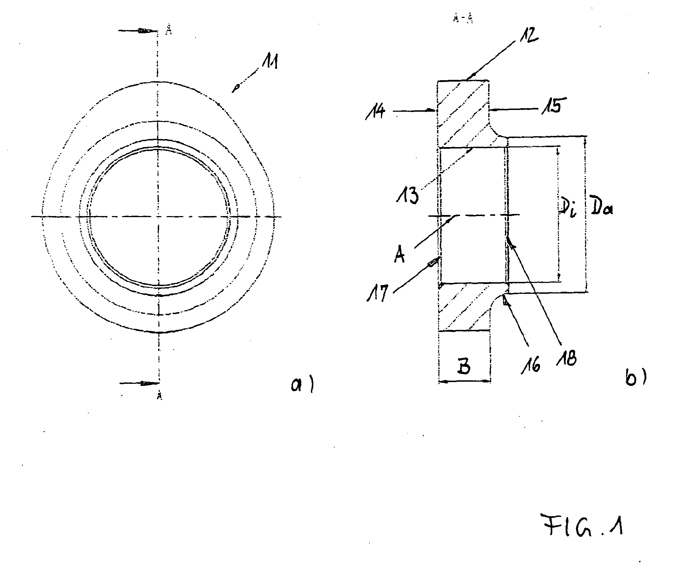

Die beiden Darstellungen der Figur 1 werden nachstehend gemeinsam beschrieben. Ein Nocken 11 ist in der Sonderform als Bundnocken dargestellt und läßt die folgenden Merkmale erkennen: eine Nockenaußenkontur 12 bzw. Nockenfläche mit rein achsparallelen Mantelflächen, d.h. reiner ZylinderForm, auf der Konturgrundfläche, weiter eine Nockenbohrung 13, eine erste plane Stirnfläche 14 und eine zweite plane Stirnfläche 15, aus der sich mit gerundetem Übergang ein Ringbund 16 erhebt. Die Stirnflächen 14, 15 sind exakt parallel zueinander und achsnormal zur Längsachse A der Nockenbohrung 13. In der Nockenbohrung 13 sind Facetten 17, 18 erkennbar, die bereits beim Warmumformen entstanden sind. Das Innenmaß der Nockenbohrung ist mit Di bezeichnet, das Außenmaß des Bundes am axialen Ende mit Dα und die Breite der Nockenlaufbahn mit B.

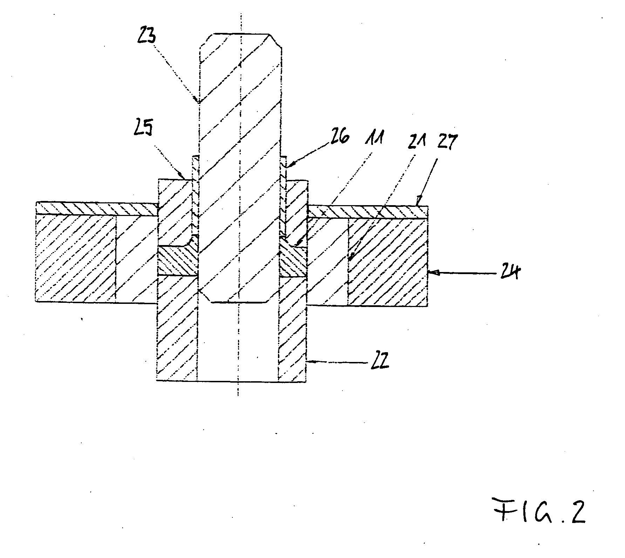

In Figur 2 ist der Nocken 11 eingelegt in eine Matrize 21 dargestellt, wobei sich der Nocken auf einem Unterstempel 22 auflegt, der spielfrei in die Matrize 21 eingreift. In die Nockenbohrung 13 ist ein Dorn 23 eingeführt, dessen Position gegenüber einer Matrizenaufnahme 24 exakt bestimmt ist, insbesondere ist der Dorn starr mit der Matrizenaufnahme 24 verbunden. Auf der oberen Stirnseite und dem Bund liegt ein geteilter Oberstempel auf, der einen äußeren Konturstempel 25 und einen inneren Bundstempel 26 umfaßt. Gemeinsam greifen die beiden Oberstempel spielfrei zwischen Dorn und Matrize ein. Es ist weiterhin eine Abdeckung 27 zu sehen, die die Matrize 21 oben abdeckt. Die dargestellte Situation zeigt den Zustand am Ende des Kalibrierens, bei dem der Nocken vollkommen spielfrei zwischen Matrize, Oberstempel, Unterstempel und Dorn eingeschlossen ist.

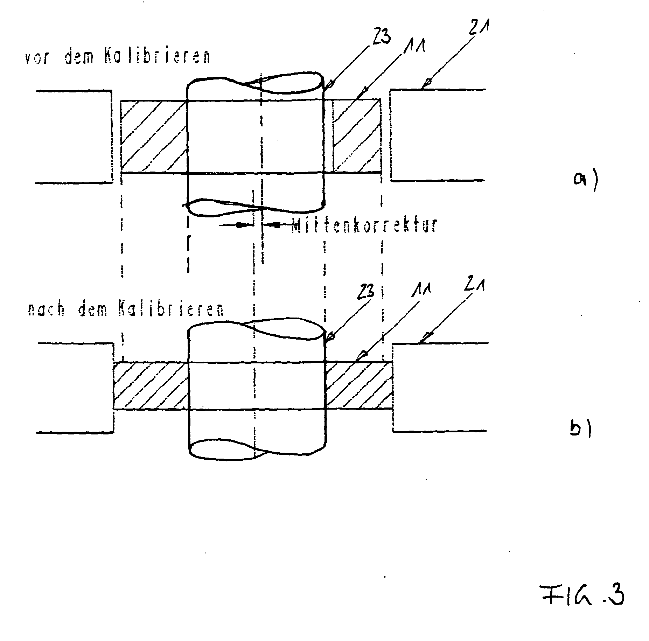

In Figur 3 ist die Situation eines Nockens 11 gegenüber einer Matrize 21 und einem Dorn 23 eines Kalibriergesenks gezeigt, und zwar in Darstellung a) vor dem Kalibrieren und Darstellung b) nach dem Kalibrieren.

Es ist erkennbar, daß die Nockenkontur in der Darstellung a) noch Spiel gegenüber der Matrize 21 hat, ebenso wie der Dorn 23 Spiel gegenüber der Nockenbohrung 13 hat. Gleichzeitig ist auch ein Lagefehler der Nockenbohrung gegenüber dem Dorn erkennbar. Es wäre auch möglich, daß eines der beiden Werkzeugteile Matrize 21 und Dorn 27 die Nockenkontur bzw. die Nockenbohrung zumindest an einer Umfangsstelle bereits spielfrei fängt und Radialspiel nur zwischen dem jeweils anderen der Werkzeugteile und dem Nocken auf dem gesamten Umfang vorliegt. In der Darstellung b) ist der Zustand nach dem Abschluß des Kalibrierens gezeigt. Die Breite des Nockens ist wesentlich reduziert. Dadurch ist nunmehr die Nockenkontur gegenüber der Matrize ebenso spielfrei wie die Nockenbohrung gegenüber dem Dorn. Die Nockenbohrung hat hiermit eine Mittenkorrektur erhalten, zudem sind die Konusfehler der Nockenkontur und der Nockenbohrung nicht mehr vorhanden.

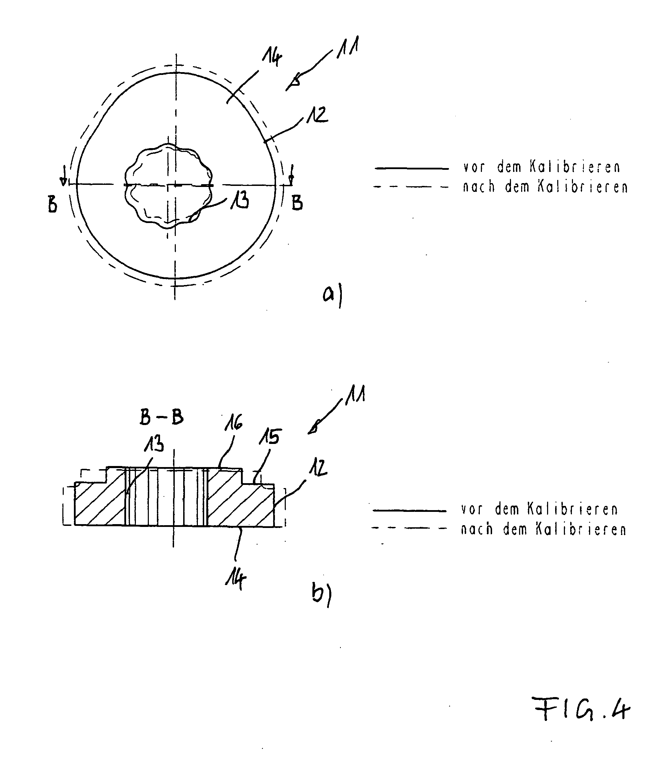

Die beiden Darstellungen der Figur 4 werden nachstehend gemeinsam beschrieben. Ein Nocken 11 in Form eines Bundnockens ist mit durchgezogenen Linien vor dem Kalibrieren und mit gestrichelten Linien nach dem Kalibrieren gezeigt. Die Bezugslinien der Bezugsziffern sind jeweils an den durchgezogenen Linien vor dem Kalibrieren angelegt. Der Nocken hat eine Nockenaußenkontur 12, die nach dem Kalibrieren auf größerem Umfang liegt als vor dem Kalibrieren. Der Nocken hat weiterhin eine erste Stirnfläche 14 und eine zweite Stirnfläche 15, über der ein Ringbund 16 übersteht. Der Abstand der Stirnflächen 14, 15 voneinander und die Höhe des Ringbundes 16 gegenüber der Stirnfläche 15, die sind vor dem Kalibrieren größer als nach dem Kalibrieren. Es ist weiterhin am Nocken eine profilierte Nockenbohrung 13 erkennbar, die ein über dem Umfang gewelltes Profil aufweist. Die Nockenbohrung 13 hat vor dem Kalibrieren eine Fehllage gegenüber der Nockenaußenkontur 12 und liegt nach dem Kalibrieren lagegerecht gegenüber der Nockenaußenkontur 12.

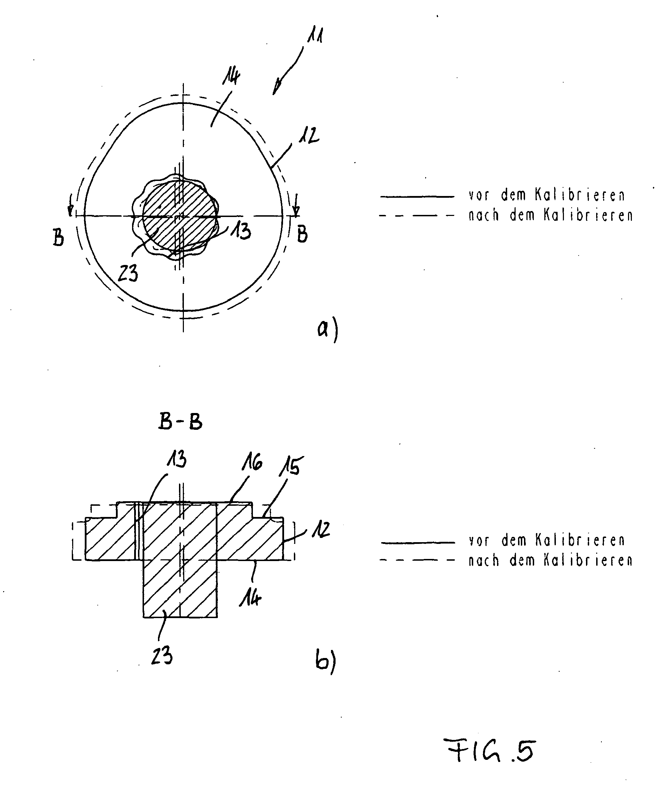

Die beiden Darstellungen der Figur 5 werden nachstehend gemeinsam beschrieben. Gleiche Einzelheiten sind mit gleichen Bezugsziffern wie in Figur 4 bezeichnet. Auch hier sind die Konturen des Nockens vor dem Kalibrieren mit durchgezogenen Linien und nach dem Kalibrieren mit gestrichelten Linien angegeben. Die Bezugslinien der Bezugsziffern sind jeweils an den durchgezogenen Linien vor dem Kalibrieren angelegt. Zusätzlich zum Nocken 11 ist der Dorn 23 eingezeichnet, gegenüber dem die über dem Umfang gewellte profilierte Nockenbohrung 13 vor dem Kalibrieren eine Fehllage hat während sie nach dem Kalibrieren idealisiert konzentrisch zum Dorn 23 liegt. Der Dorn ist hierbei gegenüber der Nockenaußenkontur 12 nach dem Kalibrieren lagegerecht positioniert, was sich aus der lagerechten Anordnung der hier nicht dargestellten Matrize gegenüber dem Dorn ergibt.

### Bezugszeichenliste

- 11: Nocken
- 12: Nockenkontur
- 13: Nockenbohrung
- 14: Stirnfläche
- 15: Stirnfläche
- 16: Bund
- 17: Facette
- 18: Facette

- 21: Matrize
- 22: Unterstempel
- 23: Dorn
- 24: Matrizenhalter
- 25: Oberstempel
- 26: Bundstempel
- 27: Abdeckung

## Patentansprüche

1. Verfahren zum Herstellen von Nocken für gebaute Nockenwellen mit den Schritten
Warmumformen eines Nockens (11) mit Ausformen einer Nockenaußenkontur und Lochen einer Nockenbohrung (13), sowie
axiales und radiales Kalibrieren des Nockens (11) wobei das Kalibrieren die Teilschritte - Einlegen des Nockens in eine ungeteilte Matrize (21), die die kalibrierte Nockenaußenkontur (12) definiert,
-Einführen eines Dorns (23) in die Nockenbohrung (13), der die kalibrierte Nockenbohrung (13) definiert, und
-axiales Verkürzen des Nockens (11) zwischen einem zwischen Matrize (21) und Dorn (23) einsitzenden Unterstempel (22), auf dem der Nocken (11) mit einer ersten Stirnfläche (14) aufliegt, und einem zwischen Matrize (21) und Dorn (23) geführten Oberstempel (25), der die zweite Stirnfläche (15) des Nockens (11) beaufschlagt
umfaßt.

2. Verfahren nach Anspruch 1,
**dadurch gekennzeichnet,**
**daß** das Warmumformen des Nockens (11) die Teilschritte
- Abteilen einer Scheibe von Stabmaterial,
- Umformen der Scheibe zu einer Scheibe mit Nockenaußenkontur, und
- Lochen der Scheibe zur Erzeugung der Nockenbohrung mittels eines Lochers
umfaßt.

3. Verfahren nach einem der Ansprüche 1 oder 2,
**dadurch gekennzeichnet,**
**daß** das Lochen der Nockenbohrung mit einem runden Locher erfolgt, der eine glatte Bohrung erzeugt.

4. Verfahren nach einem der Ansprüche 1 oder 2,
**dadurch gekennzeichnet,**
**daß** das Lochen der Nockenbohrung mit einem profilierten Locher erfolgt, der eine profilierte, insbesondere über dem Umfang gewellte oder gezahnte Bohrung erzeugt.

5. Verfahren nach Anspruch 1 bis 4,
**dadurch gekennzeichnet,**
**daß** das Warmumformen nach einem Aufheizen des Materials auf über 1100°C erfolgt.

6. Verfahren nach einem der Ansprüche 2 bis 5,
**dadurch gekennzeichnet,**
**daß** das Abteilen der Scheibe vom Stabmaterial durch Abscheren erfolgt.

7. Verfahren nach Anspruch 6,
**dadurch gekennzeichnet,**
**daß** das Abscheren nach dem Aufheizen des Materials in Stabform erfolgt.

8. Verfahren nach einem der Ansprüche 1 bis 7,
**dadurch gekennzeichnet,**
**daß** das Kalibrieren in einer Restwärme aus dem Warmumformen erfolgt.

9. Verfahren nach einem der Ansprüche 1 bis 7,
**dadurch gekennzeichnet,**
**daß** das Kalibrieren nach einem Abkühlen der Nocken auf Umgebungstemperatur erfolgt.

10. Verfahren zum Herstellen einer gebauten Nockenwelle, bei dem in einem ersten Schritt Nocken gemäß dem Verfahren nach einem der Ansprüche 1 bis 9 hergestellt werden,
**dadurch gekennzeichnet,**
**daß** die Nocken (11) auf ein Wellenrohr in bestimmungsgemäßer Lage aufgefädelt werden und das Wellenrohr jeweils innerhalb der Nocken (11) durch Innenhochdruckumformen aufgeweitet wird.

11. Verfahren zum Herstellen einer gebauten Nockenwelle, bei dem in einem ersten Schritt Nocken gemäß dem Verfahren nach einem der Ansprüche 1 bis 9 hergestellt werden,
**dadurch gekennzeichnet,**
**daß** die Nocken (11) nach einem Erhitzen auf eine Welle in bestimmungsgemäßer Lage aufgefädelt werden und durch Abkühlen thermisch auf die Welle aufgeschrumpft werden

12. Verfahren zum Herstellen einer gebauten Nockenwelle, bei dem in einem ersten Schritt Nocken gemäß dem Verfahren nach einem der Ansprüche 1 bis 9 hergestellt werden,
**dadurch gekennzeichnet,**
**daß** die Nocken (11) nacheinander auf Wellenbereiche einer Welle mit einem Übermaß zur Nockenbohrung, insbesondere gerändelte Wellenbereiche oder gedrehte Wellenbereiche, aufgeschoben werden.

## Claims

1. A method of producing cams for assembled camshafts, with the following production stages:
hot forming a cam (11) including forming an outer cam contour and punching out a cam bore (13), as well as
axially and radially calibrating the cam (11), wherein the calibration process comprises the following partial stages:
placing the cam into an undivided die (21) which defines the calibrated outer cam contour (12);
introducing a mandrel (23) into the cam bore (13) which mandrel (23) defines the calibrated cam bore (13); and
axially shortening the cam (11) between a bottom punch (22) which is arranged between the die (21) and the mandrel (23) and on which the cam (11) rests by means of its first end face (14), and an upper punch (25) which is guided between the die (21) and the mandrel (23) and which loads the second end face (15) of the cam (11).

2. A method according to claim 1,
**characterised in**
**that** the process of hot forming the cam (11) comprises the following partial stages:
separating a disc from a bar material;
forming the disc into a disc with an outer cam contour, and
perforating the disc for producing the cam bore by means of a punch.

3. A method according to any one of claims 1 or 2,
**characterised in**
**that** the cam bore is produced by using a round punch which produces a smooth bore.

4. A method according to any one of claims 1 or 2,
**characterised in**
**that** the cam bore is produced by using a profiled punch which produces a profiled bore, more particularly a circumferentially undulating or toothed bore.

5. A method according to any one of claims 1 to 4,
**characterised in**
**that** the hot forming operation takes place after the material has been heated to a temperature in excess of 1100 °C.

6. A method according to any one of claims 2 to 5,
**characterised in**
**that** the disc is separated from the bar material by being sheared off.

7. A method according to claim 6,
**characterised in**
**that** shearing takes place after the bar-shaped material has been heated.

8. A method according to any one of claims 1 to 7,
**characterised in**
**that** calibrating takes place in a residual heat from the hot forming operation.

9. A method according to claim1 1 to 7,
**characterised in**
**that** calibrating takes place after the cams have cooled to ambient temperature.

10. A method of producing an assembled camshaft, according to which method, during a first stage, cams are produced according to any one of claims 1 to 9,
**characterised in**
**that** the cams (11) are slid on to a shaft tube into a predetermined position and that, inside the cams (11), the shaft tube is widened by internal high-pressure forming.

11. A method of producing an assembled camshaft, according to which method, during a first stage, cams are produced according to any one of claims 1 to 9,
**characterised in**
**that**, after a heating operation, the cams (11) are slid on to a shaft into a predetermined position, and by being cooled, are thermally shrunk on to the shaft.

12. A method of producing an assembled camshaft according to which method, during a first stage, cams are produced according to any one of claims 1 to 9,
**characterised in**
**that** the cams (11), one after the other, are slid on to shaft regions of a shaft, having an excess dimension relative to the cam bore, more particularly on to beaded shaft regions or turned shaft regions.

## Revendications

1. Procédé de fabrication de cames pour des arbres à cames assemblés, comprenant les étapes suivantes :
formage à chaud d'une came (11) avec mise en forme d'un contour extérieur de came, et perforation d'un alésage de came (13), ainsi que
calibrage axial et radial de la came (11), le calibrage englobant les sous-opérations ci-après :
- mise en place de la came dans une matrice (21) non subdivisée, qui définit le contour extérieur de came (12) calibré,
- introduction dans l'alésage de came (13) d'un mandrin (23) qui définit l'alésage de came (13) calibré, et
- raccourcissement axial de la came (11) entre d'une part un poinçon inférieur (22), qui est placé entre la matrice (21) et le mandrin (23) et sur lequel s'appuie la came (11) avec une première surface frontale (14), et d'autre part un poinçon supérieur (25), qui est guidé entre la matrice (21) et le mandrin (23) et sollicite la deuxième surface frontale (15) de la came (11).

2. Procédé selon la revendication 1,
**caractérisé**
**en ce que** le formage à chaud de la came (11) englobe les sous-opérations :
- sectionnement d'un disque à partir d'un matériau en barre,
- formage du disque pour obtenir un disque à contour extérieur de came, et
- perforation du disque pour réaliser l'alésage de came, au moyen d'une poinçonneuse.

3. Procédé selon l'une des revendications 1 ou 2,
**caractérisé**
**en ce que** la perforation de l'alésage de came est effectuée à l'aide d'un poinçon rond, qui engendre un alésage lisse.

4. Procédé selon l'une des revendications 1 ou 2,
**caractérisé**
**en ce que** la perforation de l'alésage de came est effectuée à l'aide d'un poinçon profilé, qui engendre un alésage profilé, notamment ondulé ou denté le long de la périphérie.

5. Procédé selon les revendications 1 à 4,
**caractérisé**
**en ce que** le formage à chaud s'effectue après un échauffement du matériau à plus de 1100°C.

6. Procédé selon l'une des revendications 2 à 5,
**caractérisé**
**en ce que** le sectionnement du disque à partir du matériau en barre s'effectue par cisaillage.

7. Procédé selon la revendication 6,
**caractérisé**
**en ce que** le cisaillage s'effectue après l'échauffement du matériau en forme de barre.

8. Procédé selon l'une des revendications 1 à 7,
**caractérisé**
**en ce que** le calibrage s'effectue dans le cadre d'une chaleur résiduelle provenant du formage à chaud.

9. Procédé selon l'une des revendications 1 à 7,
**caractérisé**
**en ce que** le calibrage s'effectue après un refroidissement des cames à la température ambiante.

10. Procédé de fabrication d'un arbre à cames assemblé, d'après lequel, au cours d'une première étape, on fabrique des cames conformément au procédé selon l'une des revendications 1 à 9,
**caractérisé**
**en ce que** les cames (11) sont enfilées sur un arbre en forme de tube, dans une position prédéterminée correcte, et l'arbre en forme de tube est évasé respectivement à l'intérieur des cames (11), par déformation sous l'effet d'une haute pression intérieure.

11. Procédé de fabrication d'un arbre à cames assemblé, d'après lequel, au cours d'une première étape, on fabrique des cames conformément au procédé selon l'une des revendications 1 à 9,
**caractérisé**
**en ce que** les cames (11), après avoir été chauffées, sont enfilées sur un arbre dans une position prédéterminée correcte, et, par refroidissement, sont frettées thermiquement sur l'arbre.

12. Procédé de fabrication d'un arbre à cames assemblé, d'après lequel, au cours d'une première étape, on fabrique des cames conformément au procédé selon l'une des revendications 1 à 9,
**caractérisé**
**en ce que** les cames (11) sont engagées successivement sur des zones d'arbre d'un arbre, qui présentent une cote en excès par rapport à l'alésage de came, notamment des zones d'arbre moletées ou des zones d'arbre tournées.
